# EUROPÄISCHE PATENTSCHRIFT

(11) **EP 3 811 758 B1**
(45) Veröffentlichungstag und Bekanntmachung des Hinweises auf die Patenterteilung: **02.08.2023**
(21) Anmeldenummer: 19204467.5
(22) Anmeldetag: 22.10.2019
(51) Int. Cl.: A01D 34/82, A01D 34/90, B25F 5/02

(54) **HANDBEDIENTES BEARBEITUNGSGERÄT MIT ELEKTRISCHER KABELVERBINDUNG**
MANUAL WORKING TOOL WITH ELECTRICAL CABLE CONNECTION
APPAREIL DE TRAITEMENT MANUEL POURVU DE RACCORD ÉLECTRIQUE

(43) Veröffentlichungstag der Anmeldung: 28.04.2021
(73) Patentinhaber: Andreas Stihl AG & Co. KG, 71336 Waiblingen (DE)
(72) Erfinder: Lechner, Sebastian, 71334 Waiblingen (DE); Ehrler, Denis, 73249 Wernau (DE); Bläsi, Jörg, 73061 Ebersbach (DE); Förstner, Dirk, 70191 Stuttgart (DE)
(74) Vertreter: Patentanwälte Ruff, Wilhelm, Beier, Dauster & Partner mbB

(56) Entgegenhaltungen:
- EP-A2- 0 707 924
- WO-A1-96/07516
- US-A- 3 375 338
- US-A- 3 597 842
- US-A- 5 787 590

## Beschreibung

Die Erfindung bezieht sich auf ein handbedientes Bearbeitungsgerät mit einem ersten Gehäusekörper, einem sich vom ersten Gehäusekörper weg erstreckenden Geräteverbindungsteil, einem Griffgehäusekörper, der einen zweiten Gehäusekörper bildet und am Geräteverbindungsteil verschiebbar gehalten ist, wobei er in einer Gebrauchslage gegen den ersten Gehäusekörper anliegt und am ersten Gehäusekörper und/oder am Geräteverbindungsteil fixiert ist und in einer am Geräteverbindungsteil verschobenen Freigabelage vom ersten Gehäusekörper wegbewegt ist, und einer elektrischen Kabelverbindung, die an einer ersten Fixierstelle im oder am ersten Gehäusekörper fixiert ist, an einer zweiten Fixierstelle im oder am Griffgehäusekörper fixiert ist und zwischen den beiden Fixierstellen eine fingerbetätigt lösbare elektrische Steckverbindung aufweist, die in der Gebrauchslage des Griffgehäusekörpers unzugänglich ist.

Derartige Bearbeitungsgeräte sind beispielsweise als handgeführte Garten- oder Forstbearbeitungsgeräte in Gebrauch, wie Heckenschneider, Heckenscheren, Motorsensen, Hochentaster, Laubblasgeräte, Kehrgeräte, Motorsägen, Rasenmäher und Vertikutierer. Im ersten Gehäusekörper befindet sich typischerweise ein Antriebsmotor in Form eines Verbrennungsmotors oder Elektromotors für ein Bearbeitungswerkzeug, und/oder es befindet sich in diesem ersten Gehäusekörper eine Akkumulatoreinheit, kurz auch Ackupack bezeichnet, zur elektrischen Energieversorgung des Elektromotors. Am Griffgehäusekörper ist typischerweise ein Bediengriff angeordnet, der optional zusammen mit einem weiteren Bediengriff zum Halten des Gerätes dient und an dem meist ein oder mehrere Bedienelemente angeordnet sind, mittels denen der Benutzer den Betrieb des Gerätes steuern kann. Die elektrische Kabelverbindung beinhaltet eine oder mehrere Kabelleitungen bzw. elektrische Leitungen, die zur Übertragung zugehöriger elektrischer Signale oder elektrischer Leistung zwischen dem ersten Gehäusekörper und dem Griffgehäusekörper dienen. Bei Geräten vom sogenannten Schaftgerätetyp, d.h. Schaftgeräten, fungiert ein Schaftrohr als Geräteverbindungsteil zwischen dem ersten Gehäusekörper und dem Bearbeitungswerkzeug, wobei sich der Antriebsmotor für das Bearbeitungswerkzeug im ersten Gehäusekörper oder alternativ auf der Werkzeugseite befindet.

Ein bekanntes Bearbeitungsgerät der eingangs genannten Art wird von der Anmelderin in Form einer Motorsense unter der Modellbezeichnung FSA 130 hergestellt. Bei diesem bekannten Gerät ist die fingerbetätigt lösbare elektrische Steckverbindung der elektrischen Kabelverbindung zwischen dem ersten Gehäusekörper und dem Griffgehäusekörper von außen unzugänglich im Inneren des ersten Gehäusekörpers angeordnet. Um den Griffgehäusekörper vom ersten Gehäusekörper abnehmen zu können, muss zusätzlich zum Lösen von Schraubverbindungen, mit denen die beiden Gehäuseteile miteinander verbunden sind, der erste Gehäusekörper durch Lösen von Schraubverbindungen zwischen zwei Gehäusehalbschalen des ersten Gehäusekörpers geöffnet werden, um an die elektrische Steckverbindung zu gelangen und diese z.B. mit den Fingern zu lösen. Erst dann gibt die dadurch gelöste Kabelverbindung ein axiales Abziehen des Griffgehäusekörpers vom ersten Gehäusekörper entlang des bei diesem Gerät vorgesehenen Schaftrohrs frei, das sich durch den Griffgehäusekörper hindurch erstreckt. Anschließend kann der Griffgehäusekörper bei Bedarf ganz abgenommen werden, z.B. durch vollständiges Abziehen vom Schaftrohr, um beispielsweise Wartungsarbeiten vorzunehmen oder den Griffgehäusekörper zu tauschen.

Die Offenlegungsschrift US 3.597.842 offenbart eine Heckenschere mit einem Gehäuse und einem Teleskoprohr, das ein lösbar axial auf einen Anschlussstutzen des Gehäuses aufsetzbares Endrohr und ein mit diesem teleskopierbar zu koppelndes Griffrohr umfasst. Eine elektrische Kabelverbindung führt von einem tragbaren Generator durch das Teleskoprohr hindurch zum Gehäuse und beinhaltet ein kurzes Kabel, das zum Gehäuse führt, und ein vom Generator abführendes Zufuhrkabel, das lose durch das Teleskoprohr durchgeschleift und mittels einer elektrischen Steckverbindung mit dem kurzen Kabel zusammengesteckt werden kann, bevor das Teleskoprohr auf den Anschlussstutzen des Gehäuses aufgesteckt wird, wonach die elektrische Steckverbindung und die beiden Kabel lose im Teleskoprohr liegen.

Der Erfindung liegt als technisches Problem die Bereitstellung eines handbedienten Bearbeitungsgerätes der eingangs genannten Art zugrunde, das gegenüber dem oben erläuterten Stand der Technik ein einfacheres Abnehmen des Griffgehäusekörpers vom ersten Gehäusekörper ermöglicht und hinsichtlich seiner elektrischen Kabelverbindung weiter verbessert ist.

Die Erfindung löst dieses Problem durch die Bereitstellung eines handbedienten Bearbeitungsgerätes mit den Merkmalen des Anspruchs 1. Bei diesem Gerät weist die elektrische Kabelverbindung eine Kabelzusatzlänge auf, mit der die elektrische Kabelverbindung dem Wegbewegen des Griffgehäusekörpers von der Gebrauchslage in die Freigabelage folgt. Wenn sich der Griffgehäusekörper in der Freigabelage befindet, ist die elektrische Steckverbindung in einem Übergangsbereich von erstem Gehäusekörper und Griffgehäusekörper zum fingerbetätigen Lösen zugänglich. Der Übergangsbereich umfasst hierbei den Bereich zwischen dem ersten Gehäusekörper und dem Griffgehäusekörper sowie jeweils einen angrenzenden Bereich des ersten Gehäusekörpers, der dem Griffgehäusekörper zugewandt ist, und einen angrenzenden Bereich des Griffgehäusekörpers, der dem ersten Gehäusekörper zugewandt ist, soweit dieser jeweils angrenzende Bereich des ersten Gehäusekörpers bzw. des Griffgehäusekörpers fingerzugänglich ist.

Das erfindungsgemäße Bearbeitungsgerät bietet folglich den Vorteil, dass die elektrische Kabelverbindung das Wegbewegen des Griffgehäusekörpers von der Gebrauchslage am ersten Gehäusekörper in die Freigabelage nicht verhindert, da sie dieser Wegbewegung aufgrund ihrer Kabelzusatzlänge folgen kann. Sobald sich der Griffgehäusekörper in der Freigabelage befindet, ist die elektrische Steckverbindung zum Lösen durch den Benutzer mit seinen Fingern im Übergangsbereich von erstem Gehäusekörper und Griffgehäusekörper zugänglich, so dass für diesen Demontagevorgang weder der erste Gehäusekörper geöffnet werden muss, noch ein Werkzeug zum Lösen der elektrischen Steckverbindung nötig ist.

In einer Weiterbildung der Erfindung weist die elektrische Steckverbindung zwei zusammensteckbare Steckelemente auf, von denen das eine Steckelement am oder im Griffgehäusekörper festgelegt ist, wobei sich die Kabelzusatzlänge im Bereich zwischen der ersten Fixierstelle, die sich im oder am Griffgehäusekörper befindet, und dem anderen Steckelement befindet. Beim Wegbewegen des Griffgehäusekörpers vom ersten Gehäusekörper kann die Steckverbindung dieser Bewegung folgen, da hierfür die Kabelzusatzlänge zwischen der Fixierstelle am bzw. im ersten Gehäusekörper und der Steckverbindung am Griffgehäusekörper zur Verfügung steht.

In einer Ausgestaltung der Erfindung ist das eine Steckelement an einer axialen Stirnseite des Griffgehäusekörpers festgelegt, und das andere Steckelement ist an dieser axialen Stirnseite des Griffgehäusekörpers fingerzugänglich, wenn sich der Griffgehäusekörper in der Freigabelage befindet. Dadurch kann der Benutzer die Steckverbindung sehr leicht an der freiliegenden axialen Stirnseite des Griffgehäusekörpers lösen, sobald ihm diese durch das Wegbewegen des Griffgehäusekörpers vom ersten Gehäusekörper in die Freigabelage zugänglich ist.

In einer alternativen Weiterbildung der Erfindung weist die elektrische Steckverbindung zwei zusammensteckbare Steckelemente auf, von denen das eine Steckelement am oder im ersten Gehäusekörper festgelegt ist, wobei sich die Kabelzusatzlänge im Bereich zwischen dem anderen Steckelement und der zweiten Fixierstelle befindet. In dieser Weiterbildung verbleibt die elektrische Steckverbindung beim Wegbewegen des Griffgehäusekörpers vom ersten Gehäusekörper am bzw. im ersten Gehäusekörper, wobei das Wegbewegen des Griffgehäusekörpers vom ersten Gehäusekörper durch die Kabelzusatzlänge ermöglicht wird, die sich in diesem Fall zwischen der Steckverbindung und der sich im oder am Griffgehäusekörper befindenden zweiten Fixierstelle befindet.

In einer Ausgestaltung der Erfindung ist bei dieser alternativen Weiterbildung das eine Steckelement an einer axialen Stirnseite des ersten Gehäusekörpers festgelegt, und das andere Steckelement ist an dieser axialen Stirnseite des ersten Gehäusekörpers fingerzugänglich, wenn sich der Griffgehäusekörper in der Freigabelage befindet. Dadurch kann der Benutzer sehr einfach mit seinen Fingern die elektrische Steckverbindung an der axialen Stirnseite des ersten Gehäusekörpers lösen, sobald er den Griffgehäusekörper vom ersten Gehäusekörper in die Freigabelage wegbewegt hat.

In einer Weiterbildung der Erfindung ist das Geräteverbindungsteil ein Geräterohr, und die elektrische Steckverbindung ist mit einer Steckrichtung angeordnet, die mit einer Hauptrichtungskomponente parallel zu einer Längsrichtung des Geräterohrs verläuft. Das Geräterohr kann beispielsweise ein Schaftrohr des dann als Schaftgerät ausgeführten Bearbeitungsgerätes oder ein Bikelenkerrohr eines Bikelenkeraufbaus sein, wenn das Bearbeitungsgerät vom sogenannten Bikelenkertyp ist, bei dem das Gerät einen fahrradlenkerähnlichen Bediengriffaufbau besitzt. Die elektrische Steckverbindung lässt sich in der Steckrichtung lösen bzw. wieder zusammenfügen, die in diesem Fall parallel zur Längsrichtung des Geräterohrs oder jedenfalls mit einer Hauptkomponente parallel dazu verläuft, d.h. mit einer größeren Richtungskomponente parallel zur Geräterohr-Längsrichtung und mit einer kleineren Richtungskomponente senkrecht dazu.

In einer Ausgestaltung der Erfindung umgibt der Griffgehäusekörper das Geräterohr in einem an den ersten Gehäusekörper anschließenden Rohrabschnitt. Das Geräterohr kann dadurch als axiale Führung für ein axiales Wegbewegen des Griffgehäusekörpers vom ersten Gehäusekörper dienen, und optional kann eine lösbare, direkte mechanische Verbindung von Griffgehäusekörper und Geräterohr vorgesehen sein, beispielsweise um den Griffgehäusekörper in der Gebrauchslage am Geräterohr festzulegen.

In einer Weiterbildung der Erfindung umfasst die elektrische Kabelverbindung mindestens zwei Kabelleitungen, und die elektrische Steckverbindung umfasst passend dazu mindestens zwei zugehörige elektrische Steckverbindungseinheiten. Diese Ausführung ist insbesondere für Anwendungen nützlich, bei denen mehrere unterschiedliche elektrische Verbindungstypen zwischen dem ersten Gehäusekörper und dem Griffgehäusekörper gewünscht sind, z.B. eine Verbindung zu Übertragung von Sensor- und/oder Anzeigesignalen und eine andere Verbindung zur Übertragung elektrischer Steuersignale und/oder elektrischer Leistung.

In einer Ausgestaltung der Erfindung überträgt eine erste Kabelleitung ein Anzeigesignal, während eine zweite Kabelleitung ein Motorsteuerungssignal überträgt. Dies stellt eine für entsprechende Anwendungen vorteilhafte Kombination elektrischer Verbindungen in der Kabelverbindung dar.

In einer Weiterbildung der Erfindung ist der Griffgehäusekörper in der Gebrauchslage am ersten Gehäusekörper mittels einer Befestigungsschraube fixiert, die in der Freigabelage des Griffgehäusekörpers gelockert am ersten Gehäusekörper oder am Griffgehäusekörper gehalten bleibt. Dadurch ist es nicht erforderlich, Befestigungsschrauben von Schraubverbindungen zwischen dem Griffgehäusekörper und dem ersten Gehäusekörper vollständig zu lösen, um den Griffgehäusekörper vom ersten Gehäusekörper wegbewegen zu können. Die eine oder mehreren Befestigungsschrauben können vielmehr im gelockerten Zustand am ersten Gehäusekörper oder am Griffgehäusekörper verbleiben und gehen auf diese Weise nicht verloren.

In einer Weiterbildung der Erfindung ist ein Bearbeitungswerkzeug an einem dem ersten Gehäusekörper entgegengesetzten Endbereich des Geräteverbindungsteils angeordnet, und das Bearbeitungsgerät umfasst des Weiteren einen Antriebsmotor im ersten Gehäusekörper oder in einem weiteren, zweiten Gehäusekörper am dem ersten Gehäusekörper entgegengesetzten Endbereich des Geräteverbindungsteils. Dadurch lässt sich beispielsweise vorteilhaft ein Bearbeitungsgerät vom Schaftgerätetyp bereitstellen, wozu das Geräteverbindungsteil dann als Schaftrohr ausgeführt ist.

Vorteilhafte Ausführungsformen der Erfindung sind in den Zeichnungen dargestellt. Diese und weitere vorteilhafte Ausführungsformen der Erfindung werden im Folgenden näher beschrieben. Hierbei zeigen:
- Fig. 1: eine teilweise blockdiagrammatische Seitenansicht eines handbedienten Bear-beitungsgerätes mit erstem Gehäusekörper und an einem Geräteverbindungsteil verschiebbar gehaltenem Griffgehäusekörper,
- Fig. 2: eine Seitenansicht des Bearbeitungsgerätes von Fig. 1 in einer Ausführung als Motorsense,
- Fig. 3: eine Teilseitenansicht von erstem Gehäusekörper und Griffgehäusekörper des Bearbeitungsgerätes von Fig. 1 in einer Ausführung mit am Griffgehäusekörper festgelegtem Steckelement einer elektrischen Steckverbindung einer elektrischen Kabelverbindung mit dem Griffgehäusekörper in Gebrauchslage unter Weglas-sung sichtseitiger Gehäuseteile und diverser Gerätekomponenten,
- Fig. 4: eine Detailansicht eines Bereichs IV in Fig. 3,
- Fig. 5: eine Detailansicht eines Bereichs V in Fig. 3 mit zusätzlich wiedergegebenen Gerätekomponenten,
- Fig. 6: die Ansicht des Bereichs IV mit wiedergegebenen sichtseitigen Gehäuseteilen und dem Griffgehäusekörper in Freigabelage und nicht gelöster elektrischer Steckverbindung,
- Fig. 7: die Ansicht von Fig. 6 bei gelöster elektrischer Steckverbindung unter Weglas-sung eines sichtseitigen Gehäuseteils des ersten Gehäusekörpers,
- Fig. 8: die Ansicht von Fig. 4 für eine Gerätevariante mit am ersten Gehäusekörper festgelegtem Steckelement der elektrischen Steckverbindung und
- Fig. 9: die Ansicht von Fig. 6 für die Ausführungsvariante von Fig. 8.

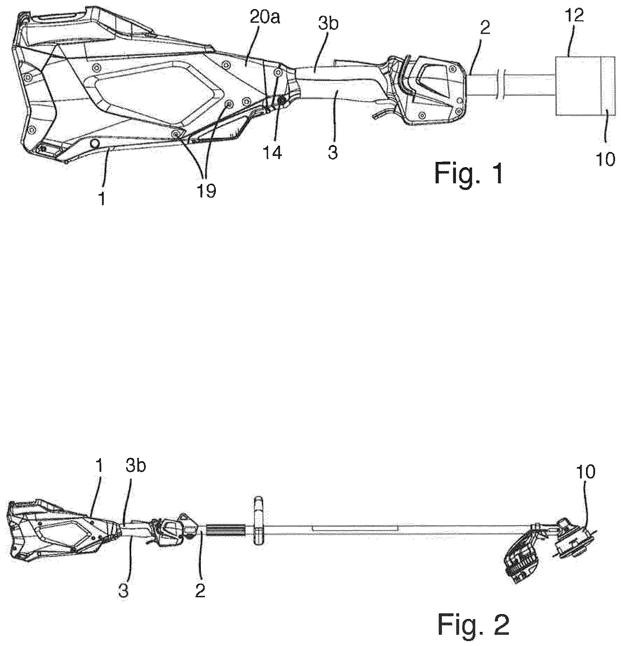

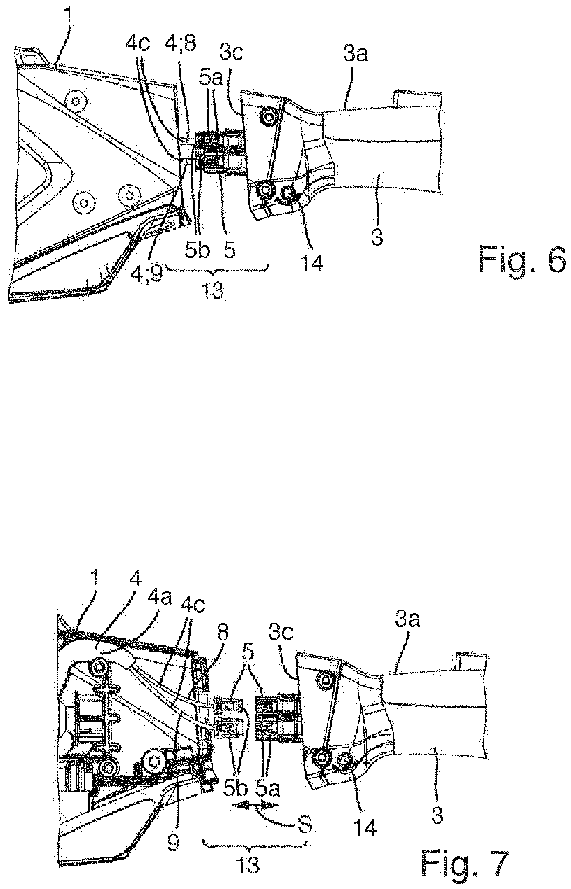

Das in Fig. 1 gezeigte, handbediente Bearbeitungsgerät beinhaltet einen ersten Gehäusekörper 1, einen sich vom ersten Gehäusekörper 1 weg erstreckenden Geräteverbindungsteil 2 und einen Griffgehäusekörper 3, der am Geräteverbindungsteil 2 verschiebbar gehalten ist, wobei er in einer in Fig. 1 gezeigten Gebrauchslage, d.h. einer Lage, die er im normalen Betriebsgebrauch des Bearbeitungsgerätes einnimmt, gegen den ersten Gehäusekörper 1 anliegt und am ersten Gehäusekörper 1 und/oder am Geräteverbindungsteil 2 fixiert ist. Vom ersten Gehäusekörper 1 kann der Griffgehäusekörper 3 aus dieser Gebrauchslage 3b heraus in eine am Geräteverbindungsteil 2 verschobene Freigabelage 3a wegbewegt werden, die in den Fig. 6 und 7 bzw. 9 für zwei spezielle Ausführungen des Bearbeitungsgerätes gezeigt ist.

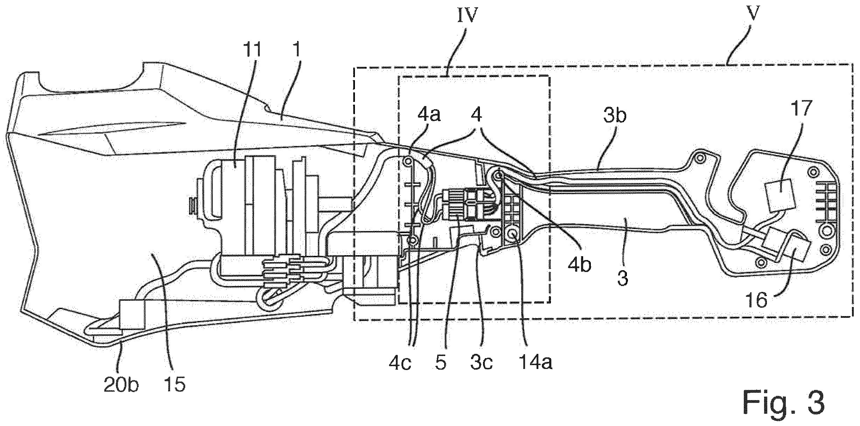

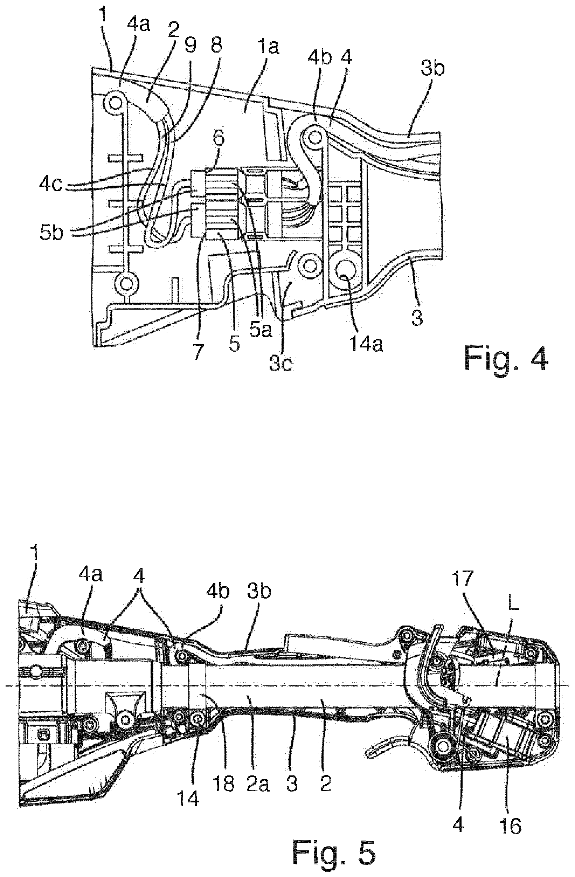

Das Bearbeitungsgerät beinhaltet des Weiteren eine elektrische Kabelverbindung 4, die an einer ersten Fixierstelle 4a im oder am ersten Gehäusekörper 1 fixiert ist, an einer zweiten Fixierstelle 4b im oder am Griffgehäusekörper 3 fixiert ist und zwischen den beiden Fixierstellen 4a, 4b eine fingerbetätigt lösbare elektrische Steckverbindung 5 aufweist. Zur besseren Sichtbarkeit dieser elektrischen Kabelverbindung 4 ist ein betreffender Gerätebereich in Fig. 3 unter Weglassung von Gehäuseteilen und anderen Gerätekomponenten wiedergegeben. So kann z.B. der erste Gehäusekörper 1 zwei Gehäusehalbschalen 20a, 20b aufweisen, die mittels einer oder mehrerer Schraubverbindungen 19 lösbar miteinander verschraubt sein können und von denen in Fig. 3 die eine Gehäusehalbschale 20a abgenommen und nur die andere Gehäusehalbschale 20b zu erkennen ist. Wie anhand der Fig. 3 und 4 in Verbindung mit Fig. 1 deutlich wird, ist die elektrische Steckverbindung 5 in der Gebrauchslage 3b des Griffgehäusekörpers 3 unzugänglich, was in den gezeigten Beispielen dadurch bedingt ist, dass sich die elektrische Steckverbindung 5 in einem nach außen abgeschlossenen, vom ersten Gehäusekörper 1 und vom Griffgehäusekörper 3 umgrenzten Geräteinnenraum befindet. In der Gebrauchslage 3b des Griffgehäusekörpers 3 ist folglich die elektrische Steckverbindung 5 für den Benutzer nicht zum fingerbetätigten Lösen zugänglich.

Die erste Fixierstelle 4a kann beispielsweise wie gezeigt von einer Kabelklemmstelle des ersten Gehäusekörpers 1 gebildet sein. Alternativ kann es sich um einen Endanschluss der Kabelverbindung 4 an einer elektrischen Gerätekomponente im ersten Gehäusekörper 1 handeln, von der die Kabelverbindung 4 abführt bzw. zu der sie hinführt, z.B. eine dortige elektrische Steuereinheit oder ein Elektronikmodul des Gerätes. Die zweite Fixierstelle 4b kann z.B. wie in den gezeigten Ausführungsbeispielen eine vom Griffgehäusekörper 3 gebildete Kabelklemmstelle oder alternativ ein Endanschluss der Kabelverbindung 4 an einer elektrischen Gerätekomponente sein, die sich am oder im Griffgehäusekörper 3 befindet, z.B. eine elektrische Bediensteuereinheit oder eine Bedienschaltereinheit oder eine Anzeigeeinheit. In der Ausführung von Fig. 3 sind beispielhaft zwei derartige elektrische Gerätekomponenten 16, 17 gezeigt, die sich im Griffgehäusekörper 3 befinden und zu denen die Kabelverbindung 4 geführt ist bzw. von denen die Kabelverbindung 4 abgeht, um diese Gerätekomponenten 16, 17 mit elektrischen Gerätekomponenten im ersten Gehäusekörper 1 elektrisch zu verbinden.

Wie insbesondere aus den Fig. 3 und 4 und den Fig. 6 und 7 bzw. 8 ersichtlich, weist die elektrische Kabelverbindung 4 eine Kabelzusatzlänge 4c auf, mit der sie dem Wegbewegen des Griffgehäusekörpers 3 von der Gebrauchslage 3b in die Freigabelage 3a folgt. Wie in diesen Figuren veranschaulicht, ist unter der Kabelzusatzlänge 4c eine zusätzliche Länge der Kabelverbindung 4 zu verstehen, die für die Kabelverbindung 4 zwecks Bereitstellung der zugehörigen elektrischen Verbindung über die Steckverbindung 5 an sich nicht benötigt wird, jedoch eine der Wegbewegung des Griffgehäusekörpers 3 von der Gebrauchslage 3b in die Freigabelage 3a folgende Bewegung der Steckverbindung 5 zulässt, ohne dass es dabei zu einem gewaltsamen Auftrennen der Steckverbindung 5 mit der damit einhergehenden Gefahr von Schädigungen der Kabelverbindung 4 kommt.

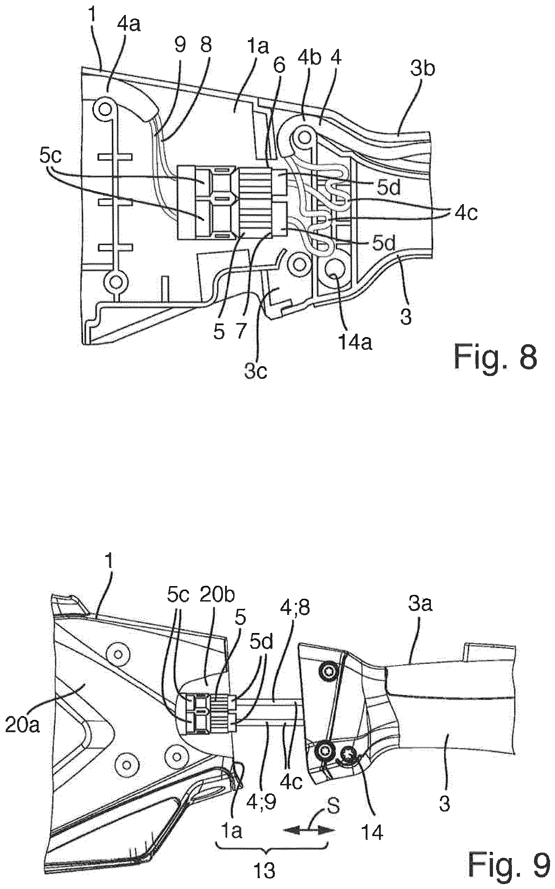

Wie speziell aus den Fig. 6 und 7 bzw. 9 ersichtlich ist, ist die elektrische Steckverbindung 5, wenn sich der Griffgehäusekörper 3 in der Freigabelage 3a befindet, zum fingerbetätigten Lösen in einem Übergangsbereich 13 von erstem Gehäusekörper 1 und Griffgehäusekörper 3 zugänglich. Dabei zeigen die Fig. 6 und 8 die elektrische Steckverbindung 5 vor dem fingerbetätigten Lösen durch den Benutzer, während Fig. 7 die elektrische Steckverbindung 5 zeigt, nachdem sie vom Benutzer unter Zuhilfenahme eines oder mehrerer seiner Finger gelöst wurde. Unter fingerbetätigtem Lösen ist hierbei zu verstehen, dass die elektrische Steckverbindung 5, wenn sie durch das Bewegen des Griffgehäusekörpers 3 in seine Freigabelage 3a im Übergangsbereich 13 zugänglich ist, grundsätzlich dafür eingerichtet ist, vom Benutzer mittels eines oder mehrerer seiner Finger gelöst zu werden, was nicht ausschließt, dass der Benutzer die elektrische Steckverbindung 5 alternativ auch unter Verwendung eines Werkzeugs lösen kann.

In Ausführungsformen des Bearbeitungsgerätes, wie sie in den Fig. 2 bis 9 dargestellt sind, ist das Geräteverbindungsteil 2 ein Geräterohr, und die elektrische Steckverbindung 5 ist mit einer Steckrichtung S angeordnet, die mit einer Hauptrichtungskomponente, d.h. vollständig oder überwiegend, parallel zu einer Längsrichtung L des Geräterohrs verläuft. In vorteilhaften Realisierungen umgibt der Griffgehäusekörper 3 das Geräteverbindungsteil 2 in Form des Geräterohrs in einem an den ersten Gehäusekörper 1 anschließenden Rohrabschnitt 2a.

In entsprechenden Ausführungen umfasst das Bearbeitungsgerät, wie in den gezeigten Beispielen der Fig. 1 und 2, ein Bearbeitungswerkzeug 10, das an einem dem ersten Gehäusekörper 1 entgegengesetzten Endbereich des Geräteverbindungsteils 2 angeordnet ist, und einen Antriebsmotor 11 im ersten Gehäusekörper 1 oder in einem zweiten Gehäusekörper 12 am dem ersten Gehäusekörper 1 entgegengesetzten Endbereich des Geräteverbindungsteils 2. In diesem Fall ist das Bearbeitungsgerät ein solches vom Schaftgerätetyp mit dem Geräteverbindungsteil 2 als Schaftrohr. Alternativ kann das Geräteverbindungsteil 2 auch ein Bikelenkerrohr eines Bikelenkeraufbaus sein, wenn das Bearbeitungsgerät ein solches vom Bikelenkertyp ist. In der in Fig. 3 gezeigten Realisierung befindet sich der Antriebsmotor 11 im ersten Gehäusekörper 1. Optional weist der erste Gehäusekörper 1 einen Akkupack-Aufnahmeraum 15 zum Aufnehmen eines Akkupacks für die elektrische Energieversorgung des Antriebsmotors 11 auf.

In entsprechenden Ausführungen weist die elektrische Steckverbindung 5, wie beim Ausführungsbeispiel der Fig. 3 bis 7, zwei zusammensteckbare Steckelemente 5a, 5b auf, von denen das eine Steckelement 5a am oder im Griffgehäusekörper 3 festgelegt ist, wobei sich die Kabelzusatzlänge 4c im Bereich zwischen der ersten Fixierstelle 4a und dem anderen Steckelement 5b befindet. In vorteilhaften Realisierungen ist hierbei, wie gezeigt, das eine Steckelement 5a an einer axialen Stirnseite 3c des Griffgehäusekörpers 3 festgelegt, und das andere Steckelement 5b ist an dieser axialen Stirnseite 3c des Griffgehäusekörpers 3 fingerzugänglich, wenn sich der Griffgehäusekörper 3 in der Freigabelage 3a befindet. Dadurch kann der Benutzer das Steckelement 5b vom an der axialen Stirnseite 3c des Griffgehäusekörpers 3 verbleibenden Steckelement 5a und dadurch die Steckverbindung 5 insgesamt fingerbetätigt lösen. Fig. 7 zeigt die gelöste Steckverbindung 5. Nach dem Lösen der Steckverbindung 5 kann der Benutzer bei Bedarf den Griffgehäusekörper 3 weiter vom ersten Gehäusekörper 1 wegbewegen bzw. abziehen, z.B. durch vollständiges Abziehen vom Geräteverbindungsteil 2 bzw. Geräterohr. In alternativen Ausführungen ist das Steckelement 5a an einem anderen Bereich des Griffgehäusekörpers 3 festgelegt, wobei es sich vorzugsweise um einen den ersten Gehäusekörper 1 zugewandten Bereich des Griffgehäusekörpers 3 handelt, der aber nicht zwingend eine axiale Stirnseite des Griffgehäusekörpers 3 bilden muss.

Es versteht sich, dass die elektrische Steckverbindung 5 unter Umkehr des Bewegungsablaufs ausgehend z.B. von Fig. 7 oder 9 vom Benutzer auch wieder fingerbetätigt geschlossen werden kann, indem der Benutzer die beiden zusammengehörigen Steckelemente 5a, 5b wieder zusammensteckt, wofür die Zugänglichkeit im Übergangsbereich 13 gegeben ist, wenn sich der Griffgehäusekörper 3 in der Freigabelage 3a befindet. Anschließend kann der Griffgehäusekörper 3 wieder in seine Gebrauchslage 3b am ersten Gehäusekörper 1 verschoben und in seiner Gebrauchslage 3b am ersten Gehäusekörper 1 und/oder am Geräteverbindungsteil 2 fixiert werden.

In entsprechenden Ausführungsformen weist die elektrische Steckverbindung 5, wie beim Ausführungsbeispiel der Fig. 8 und 9, zwei zusammensteckbare Steckelemente 5c, 5d auf, von denen das eine Steckelement 5c am oder im ersten Gehäusekörpers 1 festgelegt ist, wobei sich die Kabelzusatzlänge 4c im Bereich zwischen dem anderen Steckelement 5d und der zweiten Fixierstelle 4b befindet. In vorteilhaften Realisierungen ist hierbei das eine Steckelement 5c wie gezeigt an einer axialen Stirnseite 1a des ersten Gehäusekörpers 1 festgelegt, und das andere Steckelement 5d ist an dieser axialen Stirnseite 1a des ersten Gehäusekörpers 1 fingerzugänglich, wenn sich der Griffgehäusekörper 3 in der Freigabelage 3a befindet. Alternativ ist das eine Steckelement 5c an einem anderen Bereich des ersten Gehäusekörpers 1 festgelegt, der nicht zwingend eine axiale Stirnseite desselben bilden muss, wobei er sich vorzugsweise an einer dem Griffgehäusekörper 3 zugewandten Seite des ersten Gehäusekörpers 1 befindet.

In entsprechenden Ausführungen umfasst die elektrische Kabelverbindung 4, wie in den gezeigten Beispielen, zwei Kabelleitungen 8, 9, alternativ nur eine oder mehr als zwei Kabelleitungen, und die elektrische Steckverbindung 5 umfasst zwei zugehörige elektrische Steckverbindungseinheiten 6, 7, alternativ nur eine oder mehr als zwei Steckverbindungseinheiten. In entsprechenden Realisierungen überträgt die erste Kabelleitung 8 ein Anzeigesignal, z.B. zum optischen Anzeigen eines Betriebszustands des Gerätes, und die zweite Kabelleitung 9 überträgt ein Motorsteuerungssignal, z.B. ein Signal zum Einschalten und Ausschalten des Antriebsmotors 11 und/oder zur Leistungsregelung des Antriebsmotors 11. In alternativen Realisierungen übertragen beide Kabelleitungen 8, 9 unterschiedliche Anzeigesignale oder unterschiedliche Motorsteuerungssignale oder andere elektrische Signale, die zwischen elektrischen Komponenten im ersten Gehäusekörper 1 einerseits und elektrischen Komponenten im Griffgehäusekörper 3 andererseits übertragen werden sollen.

In vorteilhaften Ausführungsformen ist der Griffgehäusekörper 3, wie in den gezeigten Ausführungsbeispielen, in der Gebrauchslage 3b am ersten Gehäusekörper 1 und/oder am Geräteverbindungsteil 2 mittels mindestens einer Befestigungsschraube 14 fixiert, die in der Freigabelage 3a des Griffgehäusekörpers 3 gelockert am ersten Gehäusekörper 1 oder am Griffgehäusekörper 3 in einer zugehörigen Schrauböffnung 14a gehalten bleibt.

In den gezeigten Beispielen ist der Griffgehäusekörper 3 in der Gebrauchslage 3a am Geräteverbindungsteil 2 unter Verwendung eines Klemmrings 18 am Gehäuseverbindungsteil 2 fixiert, wobei der Klemmring 18 mittels der Befestigungsschraube 14 in seine Festklemmstellung verbracht werden kann. Wenn die Befestigungsschraube 14 gelockert wird, lockert dies die Klemmung des Klemmrings 18, so dass der Griffgehäusekörper 3 axial entlang des Geräteverbindungsteils 2 bewegt werden kann und damit insbesondere zwischen seiner Gebrauchslage 3b und seiner Freigabelage 3a. Die Befestigungsschraube 14 braucht dazu nicht vollständig herausgedreht, d.h. vom Griffgehäusekörper 3 gelöst werden, sondern kann im gelockerten Zustand am Griffgehäusekörper 3 verbleiben. Der gelockerte Klemmring 18 bewegt sich dann mit dem Griffgehäusekörper 3 entlang des Geräteverbindungsteils 2 mit.

In sehr vorteilhafter Weise ist es folglich bei diesen Ausführungen des Bearbeitungsgerätes nicht erforderlich, zum Abnehmen des Griffgehäusekörpers 3 vom ersten Gehäusekörper 1 und bei Bedarf zusätzlich vom Geräteverbindungsteil 2 ein Außengehäuse des ersten Gehäusekörpers 1 oder des Griffgehäusekörpers 3 zu öffnen, um an die elektrische Steckverbindung 5 zu gelangen und diese lösen zu können. Es genügt das Lockern der mindestens einen Befestigungsschraube 14, wonach der Griffgehäusekörper 3 am Geräteverbindungsteil 2 von der Gebrauchslage 3b in die Freigabelage 3a verschoben und anschließend die elektrische Steckverbindung 5 fingerbetätigt gelöst werden kann, ohne dass dazu zwangsweise ein Werkzeug erforderlich ist. Danach kann der Griffgehäusekörper 3 vollständig vom Geräteverbindungsteil 2 axial abgezogen werden, z.B. für Reparatur- oder Austauschzwecke. In umgekehrtem Bewegungsablauf kann der reparierte Griffgehäusekörper 3 oder ein neuer Griffgehäusekörper 3 auf das Geräteverbindungsteil 2 aufgesetzt und in die Freigabelage 3a gebracht werden, woraufhin die elektrische Steckverbindung 5 zusammengesteckt und anschließend der Griffgehäusekörper 3 in seine Gebrauchslage 3b am ersten Gehäusekörper 1 bewegt und wieder am Geräteverbindungsteil 2 und/oder am ersten Gehäusekörper 1 fixiert werden kann.

Wie die gezeigten und die weiteren oben erwähnten Ausführungsbeispiele deutlich machen, stellt die Erfindung ein handbetätigtes Bearbeitungsgerät zur Verfügung, das in vorteilhaft einfacher Weise ein Abnehmen des Griffgehäusekörpers vom ersten Gehäusekörper in Fällen ermöglicht, in denen hierzu eine elektrische Steckverbindung einer elektrischen Kabelverbindung zwischen erstem Gehäusekörper und Griffgehäusekörper gelöst werden muss. Die Erfindung eignet sich insbesondere für handgeführte Garten- oder Forstbearbeitungsgeräte, unter anderem für solche vom Schaftgerätetyp oder vom Bikelenkertyp.

## Patentansprüche

1. Handbedientes Bearbeitungsgerät, insbesondere handgeführtes Garten- oder Forstbearbeitungsgerät, mit
- einem ersten Gehäusekörper (1),
- einem sich vom ersten Gehäusekörper (1) weg erstreckenden Geräteverbindungsteil (2),
- einem Griffgehäusekörper (3), der am Geräteverbindungsteil (2) verschiebbar gehalten ist, wobei er in einer Gebrauchslage (3b) gegen den ersten Gehäusekörper anliegt und am ersten Gehäusekörper und/oder am Geräteverbindungsteil (2) fixiert ist und in einer am Geräteverbindungsteil (2) verschobenen Freigabelage (3a) vom ersten Gehäusekörper (1) wegbewegt ist, und
- einer elektrischen Kabelverbindung (4), die an einer ersten Fixierstelle (4a) im oder am ersten Gehäusekörper (1) fixiert ist, an einer zweiten Fixierstelle (4b) im oder am Griffgehäusekörper (3) fixiert ist und zwischen den beiden Fixierstellen (4a, 4b) eine fingerbetätigt lösbare elektrische Steckverbindung (5) aufweist, die in der Gebrauchslage (3b) des Griffgehäusekörpers (3) unzugänglich ist,
wobei
- die elektrische Kabelverbindung (4) eine Kabelzusatzlänge (4c) aufweist, mit der sie dem Wegbewegen des Griffgehäusekörpers (3) von der Gebrauchslage in die Freigabelage folgt, und
- die elektrische Steckverbindung (5) zum fingerbetätigten Lösen in einem Übergangsbereich (13) von erstem Gehäusekörper (1) und Griffgehäusekörper (3) zugänglich ist, wenn sich der Griffgehäusekörper (3) in der Freigabelage (3a) befindet.

2. Handbedientes Bearbeitungsgerät nach Anspruch 1, weiter **dadurch gekennzeichnet, dass**
- die elektrische Steckverbindung (5) zwei zusammensteckbare Steckelemente (5a, 5b) aufweist, von denen das eine Steckelement (5a) am oder im Griffgehäusekörper (3) festgelegt ist, und
- sich die Kabelzusatzlänge (4c) im Bereich zwischen der ersten Fixierstelle (4a) und dem anderen Steckelement (5b) befindet.

3. Handbedientes Bearbeitungsgerät nach Anspruch 2, weiter **dadurch gekennzeichnet, dass** das eine Steckelement (5a) an einer axialen Stirnseite (3c) des Griffgehäusekörpers (3) festgelegt ist und das andere Steckelement (5b) an dieser axialen Stirnseite (3c) des Griffgehäusekörpers (3) fingerzugänglich ist, wenn sich der Griffgehäusekörper (3) in der Freigabelage (3a) befindet.

4. Handbedientes Bearbeitungsgerät nach Anspruch 1, weiter **dadurch gekennzeichnet, dass**
- die elektrische Steckverbindung (5) zwei zusammensteckbare Steckelemente (5c, 5d) aufweist, von denen das eine Steckelement (5c) am oder im ersten Gehäusekörper (1) festgelegt ist, und
- sich die Kabelzusatzlänge (4c) im Bereich zwischen dem anderen Steckelement (5d) und der zweiten Fixierstelle (4b) befindet.

5. Handbedientes Bearbeitungsgerät nach Anspruch 4, weiter **dadurch gekennzeichnet, dass** das eine Steckelement (5c) an einer axialen Stirnseite (1a) des ersten Gehäusekörpers (1) festgelegt ist und das andere Steckelement (5d) an dieser axialen Stirnseite (1a) des ersten Gehäusekörpers (1) fingerzugänglich ist, wenn sich der Griffgehäusekörper (3) in der Freigabelage (3a) befindet.

6. Handbedientes Bearbeitungsgerät nach einem der Ansprüche 1 bis 5, weiter **dadurch gekennzeichnet, dass** das Geräteverbindungsteil (2) ein Geräterohr ist und die elektrische Steckverbindung (5) mit einer Steckrichtung (S) angeordnet ist, die mit einer Hauptrichtungskomponente parallel zu einer Längsrichtung (L) des Geräterohrs verläuft.

7. Handbedientes Bearbeitungsgerät nach Anspruch 6, weiter **dadurch gekennzeichnet, dass** der Griffgehäusekörper (3) das Geräterohr in einem an den ersten Gehäusekörper (1) anschließenden Rohrabschnitt (2a) umgibt.

8. Handbedientes Bearbeitungsgerät nach einem der Ansprüche 1 bis 7, weiter **dadurch gekennzeichnet, dass** die elektrische Kabelverbindung (4) mindestens zwei Kabelleitungen (8, 9) und die elektrische Steckverbindung (5) mindestens zwei zugehörige elektrische Steckverbindungseinheiten (6, 7) umfasst.

9. Handbedientes Bearbeitungsgerät nach Anspruch 8, weiter **dadurch gekennzeichnet, dass** eine erste Kabelleitung (8) ein Anzeigesignal überträgt und eine zweite Kabelleitung (9) ein Motorsteuerungssignal überträgt.

10. Handbedientes Bearbeitungsgerät nach einem der Ansprüche 1 bis 9, weiter **dadurch gekennzeichnet, dass** der Griffgehäusekörper (3) in der Gebrauchslage (3b) am ersten Gehäusekörper (1) und/oder am Geräteverbindungsteil (2) mittels mindestens einer Befestigungsschraube (14) fixiert ist, die in der Freigabelage (3a) des Griffgehäusekörpers (3) gelockert am ersten Gehäusekörper (1) oder am Griffgehäusekörper (3) gehalten bleibt.

11. Handbedientes Bearbeitungsgerät nach einem der Ansprüche 1 bis 10, weiter **gekennzeichnet durch**
- ein Bearbeitungswerkzeug (10), das an einem dem ersten Gehäusekörper (1) entgegengesetzten Endbereich des Geräteverbindungsteils (2) angeordnet ist, und
- einen Antriebsmotor (11) im ersten Gehäusekörper (1) oder in einem zweiten Gehäusekörper (12) am dem ersten Gehäusekörper (1) entgegengesetzten Endbereich des Geräteverbindungsteils (2).

## Claims

1. Hand-operated working apparatus, preferably a handheld garden or forestry working apparatus, comprising
- a first housing body (1),
- an apparatus connecting part (2) extending away from the first housing body (1),
- a handle housing body (3), which is displaceably held on the apparatus connecting part (2), wherein it rests against the first housing body in a position of use (3b) and is fixed to the first housing body and/or to the apparatus connecting part (2) and, in a release position (3a) displaced on the apparatus connecting part (2), is moved away from the first housing body (1), and
- an electrical cable connection (4), which is fixed at a first fixing point (4a) in or on the first housing body (1), is fixed at a second fixing point (4b) in or on the handle housing body (3) and, between the two fixing points (4a, 4b), has a finger-actuated detachable electrical plug-in connection (5) which is inaccessible in the position of use (3b) of the handle housing body (3),
wherein
- the electrical cable connection (4) has an additional cable length (4c), with which it follows the movement of the handle housing body (3) away from the position of use into the release position, and
- the electrical plug-in connection (5) for finger-actuated detachment is accessible in a transition region (13) from the first housing body (1) and the handle housing body (3) when the handle housing body (3) is in the release position (3a).

2. Hand-operated working apparatus according to Claim 1, further **characterized in that**
- the electrical plug-in connection (5) has two plug-in elements (5a, 5b) which can be plugged together, of which one plug-in element (5a) is fixed to or in the handle housing body (3), and
- the additional cable length (4c) is located in the region between the first fixing point (4a) and the other plug-in element (5b).

3. Hand-operated working apparatus according to Claim 2, further **characterized in that** one plug-in element (5a) is fixed to an axial end face (3c) of the handle housing body (3), and the other plug-in element (5b) on this axial end face (3c) of the handle housing body (3) is finger-accessible when the handle housing body (3) is in the release position (3a).

4. Hand-operated working apparatus according to Claim 1, further **characterized in that**
- the electrical plug-in connection (5) has two plug-in elements (5c, 5d) which can be plugged together, of which one plug-in element (5c) is fixed to or in the first housing body (1), and
- the additional cable length (4c) is located in the region between the other plug-in element (5d) and the second fixing point (4b).

5. Hand-operated working apparatus according to Claim 4, further **characterized in that** one plug-in element (5c) is fixed to an axial end face (1a) of the first housing body (1), and the other plug-in element (5d) on this axial end face (1a) of the first housing body (1) is finger-accessible when the handle housing body (3) is in the release position (3a).

6. Hand-operated working apparatus according to one of Claims 1 to 5, further **characterized in that** the apparatus connecting part (2) is an apparatus tube, and the electrical plug-in connection (5) is arranged with a plug-in direction (S) which runs with a main directional component parallel to a longitudinal direction (L) of the apparatus tube.

7. Hand-operated working apparatus according to Claim 6, further **characterized in that** the handle housing body (3) surrounds the apparatus tube in a tube section (2a) that adjoins the first housing body (1).

8. Hand-operated working apparatus according to one of Claims 1 to 7, further **characterized in that** the electrical cable connection (4) comprises at least two cable lines (8, 9), and the electrical plug-in connection (5) comprises at least two associated electrical plug-in connection units (6, 7).

9. Hand-operated working apparatus according to Claim 8, further **characterized in that** a first cable line (8) transmits an indicating signal and a second cable line (9) transmits a motor control signal.

10. Hand-operated working apparatus according to one of Claims 1 to 9, further **characterized in that** in the position of use (3b), the handle housing body (3) is fixed to the first housing body (1) and/or to the apparatus connecting part (2) by means of at least one fixing screw (14) which, in the release position (3a) of the handle housing body (3), remains loosely held on the first housing body (1) or on the handle housing body (3).

11. Hand-operated working apparatus according to one of Claims 1 to 10, further **characterized by**
- a processing tool (10), which is arranged on an end region of the apparatus connecting part (2) that is opposite to the first housing body (1), and
- a drive motor (11) in the first housing body (1) or in a second housing body (12) on the end region of the apparatus connecting part (2) that is opposite to the first housing body (1).

## Revendications

1. Appareil de traitement manuel, plus particulièrement appareil de jardinage ou de sylviculture á guidage manuel, avec
- un premier corps de boîtier (1),
- une partie de connexion d'appareil (2) s'éloignant du premier corps de boîtier (1),
- un corps de boîtier à poignée (3), qui est maintenu de manière coulissante sur la partie de connexion d'appareil (2), dans lequel il s'appuie, dans une position d'utilisation (3b), contre le premier corps de boîtier et il est fixé au premier corps de boîtier et/ou à la partie de connexion d'appareil (2) et est éloigné, dans une position de libération (3a), coulissée sur la partie de connexion d'appareil (2), du premier corps de boîtier (1) et
- une liaison par câble électrique (4) qui est fixée au niveau d'un premier point de fixation (4a) dans ou sur le premier corps de boîtier (1), au niveau d'un deuxième point de fixation (4b) dans ou sur le corps de boîtier à poignée (3) et qui comprend, entre les deux points de fixation (4a, 4b), une liaison par enfichage (5) électrique amovible et actionnée par un doigt, qui est inaccessible dans la position d'utilisation (3b) du corps de boîtier à poignée (3),
dans lequel
- la liaison par câble électrique (4) comprend une longueur supplémentaire de câble (4c) avec laquelle elle suit l'éloignement du corps de boîtier à poignée (3) de la position d'utilisation vers la position de libération et
- la liaison électrique enfichable (5) est accessible, pour un détachement actionné par un doigt dans une zone de transition (13), du premier corps de boîtier (1) et du corps de boîtier à poignée (3) lorsque le corps de boîtier à poignée (3) se trouve dans la position de libération (3a).

2. Appareil de traitement manuel selon la revendication 1, **caractérisé en outre en ce que**
- la liaison électrique enfichable (5) comprend deux éléments d'enfichage (5a, 5b) pouvant être enfichés l'un dans l'autre, parmi lesquels le premier élément d'enfichage (5a) étant fixé sur ou dans le corps de boîtier à poignée (3) et
- la longueur supplémentaire de câble (4c) se trouve dans la zone entre le premier point de fixation (4a) et l'autre élément d'enfichage (5b).

3. Appareil de traitement manuel selon la revendication 2, **caractérisé en outre en ce que** le premier élément d'enfichage (5a) est fixé à une face frontale axiale (3c) du corps de boîtier à poignée (3) et l'autre élément d'enfichage (5b) est accessible par un doigt au niveau de cette face frontale axiale (3c) du corps de boîtier à poignée (3) lorsque le corps de boîtier à poignée (3) se trouve dans la position de libération (3a).

4. Appareil de traitement manuel selon la revendication 1, **caractérisé en outre en ce que**
- la liaison électrique enfichable (5) comprend deux éléments d'enfichage (5c, 5d) pouvant être enfichés l'un dans l'autre, parmi lesquels le premier élément d'enfichage (5c) étant fixé sur ou dans le corps de boîtier (1) et
- la longueur supplémentaire de câble (4c) se trouve dans la zone entre l'autre élément d'enfichage (5d) et le deuxième point de fixation (4b).

5. Appareil de traitement manuel selon la revendication 4, **caractérisé en outre en ce que** le premier élément d'enfichage (5c) est fixé à une face frontale axiale (1a) du premier corps de boîtier (1) et l'autre élément d'enfichage (5d) est accessible par un doigt au niveau de cette face frontale axiale (1a) du premier corps de boîtier (1) lorsque le corps de boîtier à poignée (3) se trouve dans la position de libération (3a).

6. Appareil de traitement manuel selon l'une des revendications 1 à 5, **caractérisé en outre en ce que** la partie de connexion d'appareil (2) est un tube d'appareil et la liaison électrique enfichable (5) est disposé avec une direction d'enfichage (S) qui s'étend, avec une composante de direction principale, parallèlement à une direction longitudinale (L) du tube d'appareil.

7. Appareil de traitement manuel selon la revendication 6, **caractérisé en outre en ce que** le corps de boîtier à poignée (3) entoure le tube d'appareil dans une portion tubulaire (2a) se raccordant au premier corps de boîtier (1) .

8. Appareil de traitement manuel selon l'une des revendications 1 à 7, **caractérisé en outre en ce que** la liaison électrique par câble (4) comprend au moins deux câbles (8, 9) et la liaison électrique enfichable (5) comprend au moins deux unités enfichables de liaison électrique (6, 7) correspondantes.

9. Appareil de traitement manuel selon la revendication 8, **caractérisé en outre en ce qu'**un premier câble (8) transmet un signal d'affichage et un deuxième câble (9) transmet un signal de contrôle de moteur.

10. Appareil de traitement manuel selon l'une des revendications 1 à 9, **caractérisé en outre en ce que** le corps de boîtier à poignée (3) est fixé, dans la position d'utilisation (3b), au premier corps de boîtier (1) et/ou à la partie de connexion d'appareil (2) au moyen d'au moins une vis de fixation (14), qui reste desserrée, dans la position de libération (3a) du corps de boîtier à poignée (3), sur le premier corps de boîtier (1) ou sur le corps de boîtier à poignée (3).

11. Appareil de traitement manuel selon l'une des revendications 1 à 10, **caractérisé en outre par**
- un outil de traitement (10) qui est disposé sur une partie d'extrémité, opposée au premier corps de boîtier (1), de la partie de connexion d'appareil (2) et
- un moteur d'entraînement (11) dans le premier corps de boîtier (1) ou dans un deuxième corps de boîtier (12) sur la partie d'extrémité, opposée au premier corps de boîtier (1), de la partie de connexion d'appareil (2).
